# FASCICULE DE BREVET EUROPEEN

(11) **EP 2 873 559 B1**
(45) Date de publication et mention de la délivrance du brevet: **04.03.2020**
(21) Numéro de dépôt: 14193592.4
(22) Date de dépôt: 18.11.2014
(51) Int. Cl.: B60P 3/20, B60H 1/34, B60H 1/00

(54) **Caisse isotherme pour véhicule frigorifique**
Isolierbehälter für Kühlfahrzeug
Isothermal box for refrigerated vehicle

(30) Priorité: 18.11.2013 FR 1361319
(43) Date de publication de la demande: 20.05.2015
(73) Titulaire: Lamberet, 01380 Saint Cyr sur Menthon (FR)
(72) Inventeur: Dugas, Frédéric, 01250 MONTAGNAT (FR); Tuet, Gwénaël, 01000 BOURG EN BRESSE (FR)
(74) Mandataire: Delorme, Nicolas

(56) Documents cités:
- US-A- 3 786 652
- US-A- 3 992 892
- US-A- 4 531 377
- US-A- 4 887 437
- US-A1- 2004 020 236

## Description

La présente invention concerne une caisse isotherme pour un véhicule frigorifique.

Dans le domaine de la logistique par la route, certains produits notamment les produits agroalimentaires doivent être transportés dans des véhicules dits frigorifiques qui maintiennent les produits dans la chaine du froid.

Pour cela, les véhicules frigorifiques comprennent une caisse isotherme associée à un groupe frigorifique qui produit un flux froid.

De façon conventionnelle, la réfrigération de caisses isothermes s'effectue au moyen d'un groupe frigorifique associé qui est positionné sur la face avant de la caisse.

Or, dans les caisses existantes, on constate que le flux d'air froid est introduit dans la caisse de manière peu satisfaisante et notamment ne permet pas d'obtenir une répartition homogène du froid dans la caisse. Il est précisé que la caisse peut présenter une longueur allant jusqu'à 13 mètres et un gradient de température important peut se révéler préjudiciable à la bonne conservation des produits transportés.

Dans ce contexte technique, un but de la présente invention est de fournir une caisse isotherme présentant une diffusion optimisée du flux frigorifique, et garantissant ainsi une température homogène dans l'ensemble de son volume.

Selon une définition générale de l'invention, cette caisse isotherme est sensiblement parallélépipédique, et comprend une paroi inférieure, une paroi supérieure, deux parois latérales, une paroi arrière et une paroi frontale.

Ladite paroi frontale est adaptée pour supporter un générateur frigorifique connecté à un orifice d'admission d'air réfrigéré et un orifice d'aspiration d'air ménagés dans ladite surface frontale.

En outre, ladite caisse isotherme comprend au moins un dispositif de diffusion frigorifique adapté pour être fixé en sous face de ladite paroi supérieure.

Ledit dispositif de diffusion comprend une buse convergente, un premier profilé de guidage et un deuxième profilé de guidage. Le premier profilé de guidage et le deuxième profilé de guidage sont parallèles l'un à l'autre et disposés à distance l'un de l'autre.

Le premier profilé de guidage et le deuxième profilé de guidage sont positionnés dans le prolongement de ladite buse convergente, pour guider le flux d'air réfrigéré suivant l'axe longitudinal de ladite caisse isotherme.

La distance entre les deux profilés permet à l'air froid d'émerger du dispositif sur une zone continue.

Ainsi l'air réfrigéré émis par le générateur frigorifique est tout d'abord guidé par la buse convergente puis est diffusé de façon continue sur toute la longueur de la caisse isotherme tout en étant toujours guidé latéralement par lesdits deux profilés de guidage. La distance entre les deux profilés de guidage garantit une répartition progressive et orientée du flux dans la caisse isotherme, contrairement aux dispositifs de l'art antérieur qui utilisent un conduit présentant un ou plusieurs points de diffusion. En effet, en étant ainsi diffusé, le flux se répartit équitablement dans toute la caisse isotherme, et forme un unique courant entre le dispositif de diffusion et l'orifice d'aspiration.

Il est précisé que, au sens du présent document, par profilé il est entendu une pièce fabriquée selon un profil déterminé et aussi une succession de pièces fabriquées selon un profil déterminé.

En outre, ledit dispositif de diffusion frigorifique peut comprendre une goulotte de stabilisation interposée entre ladite partie convergente et lesdits au moins deux profilés. Ladite goulotte de stabilisation peut comprendre au moins deux parois latérales et au moins une semelle inférieure. Ladite semelle inférieure peut présenter une section constante sensiblement rectangulaire et peut être adaptée pour que le flux d'air réfrigéré tende à devenir laminaire.

En traversant la buse convergente, le flux d'air est accéléré et peut connaître des perturbations locales, ainsi ladite goulotte garantit la stabilisation du flux d'air avant que celui-ci soit diffusé dans la caisse isotherme. En outre, en étant ainsi stabilisé, le flux d'air réfrigéré est guidé par lesdits deux profilés. De plus, la stabilisation du flux d'air permet de sensiblement supprimer les effets de courants tourbillonnants rapides. Cela permet notamment d'éviter le phénomène délétère que l'on trouve dans l'art antérieur dans lequel l'air réfrigéré émis est immédiatement capté par l'orifice d'aspiration et ne circule pas dans la caisse isotherme. La goulotte de stabilisation combinée avec la buse convergente et les deux profilés garantissent donc la circulation de l'air réfrigéré dans toute la caisse isotherme.

Selon un mode de réalisation, ladite buse convergente et ladite goulotte de stabilisation peuvent être monoblocs.

Préférentiellement, lesdits au moins deux profilés peuvent s'étendre sur une longueur comprise entre un tiers de la longueur de ladite caisse isotherme et deux tiers de la longueur de ladite caisse isotherme.

Cette longueur de profilé garantit une mise en forme et une diffusion optimale du flux d'air réfrigéré dans ladite caisse isotherme.

De plus, ladite buse convergente peut présenter une section sensiblement rectangulaire évolutive.

Avantageusement, le matériau composant lesdits profilés peut être un polymère adapté pour que lesdits profilés soient flexibles.

Ainsi, il est possible de faire varier le volume interne de ladite caisse isotherme, et d'adapter en conséquence la longueur desdits profilés.

Selon un mode de réalisation préférentiel, chacun desdits au moins deux profilés peut présenter une section en S comportant au moins une semelle, une partie transversale et une bande sensiblement normale à ladite partie transversale.

Par ailleurs, ladite paroi inférieure peut comporter au moins un essieu, au moins un élément roulant et au moins un point d'ancrage destiné à être accroché derrière un dispositif de traction routier.

Ainsi la caisse isotherme selon l'invention peut être remorquée sur route en vue du transport de denrées périssables.

En outre, ladite paroi arrière peut être mobile afin de permettre l'ouverture de ladite caisse isotherme.

D'autres caractéristiques et avantages se dégageront de la description qui va suivre en regard des dessins annexés qui représentent, à titre d'exemple non limitatif, une forme de réalisation de l'invention.
- La figure 1 est une vue fantôme d'une caisse isotherme selon l'invention.
- La figure 2 est une vue en perspective selon un mode de réalisation d'un dispositif de diffusion calorifique selon l'invention.
- La figure 3 montre la circulation de l'air réfrigéré au sein de la caisse isotherme.

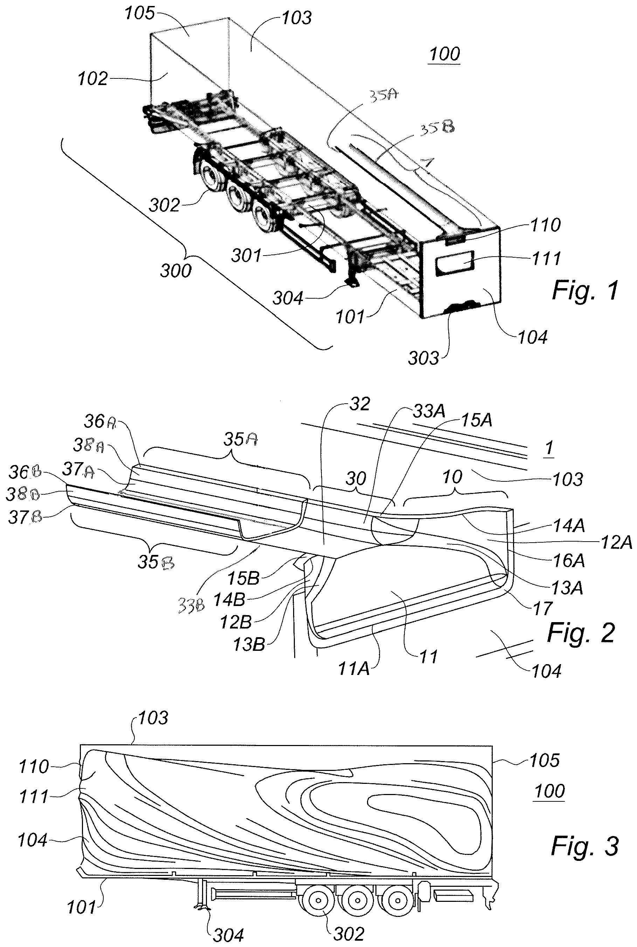

La présente invention concerne une caisse isotherme 100 visible sur la figure 1.

Dans le mode de réalisation représenté sur cette figure, la caisse 100 est assemblée de manière à constituer une remorque. Pour cela la caisse 100 est disposée sur un châssis 300 connu en soi. Il est précisé que la caisse 100 pourrait également être embarquée sur un châssis porteur.

Dans le mode de réalisation ici présenté, le châssis 300 peut comporter trois essieux 301 et six roues 302. De plus afin de pouvoir être remorqué ledit châssis 300 comporte un pivot d'ancrage 303.

En outre, comme cela est visible sur la figure 1, des cales rétractables 304 assurent l'équilibre du châssis 300 lorsque celui-ci n'est pas relié à un dispositif de traction routier.

La caisse 100 se compose d'une paroi inférieure 101, de deux parois latérales 102, d'une paroi supérieure 103, d'une paroi frontale 104 et d'une paroi arrière 105. Les différentes parois constituant la caisse 100 sont réalisées dans des panneaux en sandwich isolant.

Dans le mode de réalisation présenté en figure 1, la paroi inférieure 101 est adaptée pour être assemblée sur le châssis 300.

En outre, comme cela est visible sur la figure 1, la paroi frontale 104 présente un orifice d'admission d'air réfrigéré 110 et un orifice d'aspiration d'air 111.

Selon un mode de réalisation, les deux orifices 110 et 111 présentent chacun une forme sensiblement parallélépipédique et sont adaptés pour être connectés à un générateur frigorifique.

Par ailleurs l'orifice d'aspiration 111 peut accueillir une sonde de température permettant la régulation du flux frigorigène émis par ledit générateur frigorifique.

Comme on peut le voir sur la figure 2, la caisse 100 est de plus équipée d'un dispositif de diffusion de flux frigorifique 1.

Le dispositif 1 comprend essentiellement trois éléments combinés, à savoir : une buse convergente 10, une goulotte de stabilisation 30 et deux profilés 35A-35B de guidage.

La buse convergente 10 présente deux ouvertures sensiblement rectangulaires ; il s'agit d'une grande ouverture adaptée pour être fixée sur la paroi frontale 104, au dessus de l'orifice d'admission 110, et une petite ouverture définissant la section constante de la goulotte 30.

La buse convergente 10 comprend, pour sa part, une face inférieure 11 de forme sensiblement trapézoïdale et deux faces latérales 12A et 12B présentant également chacune une forme sensiblement trapézoïdale. La face inférieure 11 possède deux arêtes convergentes 13A et 13B. Les faces latérales 12A et 12B possède chacune, une première arête convergente 13A et 13B en commun avec la face inférieure 11. Les faces latérales 12A et 12B possèdent également chacune une seconde arête convergente, respectivement 14A et 14B.

Dans le prolongement de la buse convergente, le dispositif 1 comprend, en outre, une goulotte de stabilisation 30. La goulotte 30 comprend deux parois latérales 33A et 33B et une semelle inférieure 32, et présente une section intérieure constante et, dans l'exemple de réalisation, sensiblement rectangulaire.

La buse 10 et la goulotte 30 peuvent être monoblocs comme cela apparaît sur les figures et sont adaptées pour être fixées en sous face de la paroi supérieure 103 d'une caisse isotherme 100 visible sur la figure 1.

A cet effet, le long des arêtes 14A, 14B, 33A et 33B deux semelles supérieures continues 15A et 15B garantissent une surface de contact suffisante pour fixer la buse 10 en sous face de la paroi supérieure 103.

De même, le long des arêtes 11A, 16A et 16B, une semelle frontale 17 garantit la bonne fixation de la buse 10 sur la paroi frontale 104.

Les deux profilés de guidages 35A-35B sont assemblés, parallèles entre eux, à la goulotte 30 de manière à prolonger les deux parois latérales 33A et 33B. Les deux profilés 35A-35B sont distants l'un de l'autre. Les deux profilés 35A-35B présentent une section en S comportant chacun, une semelle 36A et 36B, une partie transversale 38A et 38B, et une bande 37A et 37B sensiblement normale à ladite partie transversale 38A et 38B.

Par ailleurs la fixation des semelles 17,15A, 15B, 36A et 36B, peut être réalisé par collage, par rivetage, ou en utilisant des éléments de visserie.

Comme cela est visible sur la figure 3, lors du fonctionnement, l'air froid pulsé depuis le générateur frigorifique traverse la buse 10 et la goulotte 30, puis est guidé par les profilés 35A-35B.

Ainsi, la distance en entre les deux profilés 35A-35B permet à l'air froid d'émerger du dispositif 1 sur une zone continue - et non ponctuelle comme cela peut être le cas pour les caisses de l'art antérieur - de la caisse isotherme 100. L'écoulement gazeux froid se fait selon un unique tourbillon qui garantit une répartition homogène du froid. L'utilisation du dispositif 1 réduit ainsi les gradients de température dans la caisse isotherme 100 et permet d'optimiser la circulation du flux frigorifique.

La caisse isotherme selon l'invention, offre donc l'avantage de contrôler le flux frigorifique afin d'empêcher la présence de forts gradients de température et de courant tourbillonnants multiples et parasites. Cette caisse isotherme garantit ainsi un refroidissement optimisé, consommant moins d'énergie et assurant une température sensiblement égale dans tout le volume de ladite caisse isotherme.

Bien entendu l'invention ne se limite pas à la seule forme d'exécution représentée ci-dessus. Il est par exemple envisageable de réaliser le dispositif de diffusion selon l'invention au moyen de tôles pliées et soudées. De plus il est bien entendu possible d'utiliser la caisse isotherme selon l'invention avec une pompe à chaleur en remplacement du générateur frigorifique.

## Revendications

1. Caisse isotherme (100) sensiblement parallélépipédique, comprenant une paroi inférieure (102), une paroi supérieure (103), deux parois latérales (102), une paroi arrière (105) et une paroi frontale (104), ladite paroi frontale (104) étant adaptée pour supporter un générateur frigorifique connecté à un orifice d'admission (110) d'air réfrigéré et un orifice d'aspiration (111) d'air, lesdits orifices (110) et (111) étant ménagés dans ladite surface frontale (104) ; ladite caisse isotherme (100) comprend en outre au moins un dispositif de diffusion frigorifique (1) adapté pour être fixé en sous face de ladite paroi supérieure (103) comprenant une buse convergente (10), un premier profilé (35A) de guidage et un deuxième profilé (35B) de guidage, le premier profilé (35A) de guidage et le deuxième profilé (35B) de guidage étant parallèles l'un à l'autre et disposés à distance l'un de l'autre, le premier profilé (35A) de guidage et le deuxième profilé (35B) de guidage étant positionnés dans le prolongement de ladite buse convergente (10), pour guider le flux d'air réfrigéré suivant l'axe longitudinal de ladite caisse isotherme (100), la caisse étant **caractérisée par** la distance entre le premier profilé (35A) de guidage et le deuxième profilé (35B) de guidage permettant à l'air froid d'émerger du dispositif de diffusion frigorifique (1) sur une zone continue.

2. Caisse isotherme (100) selon la revendication 1, **caractérisé en ce que** ledit dispositif de diffusion frigorifique (1) comprend une goulotte de stabilisation (30) interposée entre ladite partie convergente (10) et lesdits au moins deux profilés (35A-35B), ladite goulotte de stabilisation comprenant au moins deux parois latérales (33A et 33B) et au moins une semelle inférieure (32), présentant une section constante sensiblement rectangulaire, et étant adaptée pour que le flux d'air réfrigéré tende à devenir laminaire.

3. Caisse isotherme (100) selon la revendication 2, dans laquelle ladite buse convergente (10) et ladite goulotte de stabilisation (30) sont monoblocs.

4. Caisse isotherme (100) selon l'une des revendications 1 et 3, dans laquelle lesdits au moins deux profilés (35A-35B) s'étendent sur une longueur comprise entre un tiers de la longueur de ladite caisse isotherme (100) et deux tiers de la longueur de ladite caisse isotherme (100).

5. Caisse isotherme (100) selon l'une des revendications 1 à 4, dans laquelle ladite buse convergente (10) présente une section sensiblement rectangulaire évolutive.

6. Caisse isotherme (100) selon l'une des revendications 1 à 5, dans laquelle le matériau composant lesdits profilés (35A-35B) est un polymère adapté pour que lesdits profilés (35A-35B) soient flexibles.

7. Caisse isotherme (100) selon l'une des revendications 1 à 6, dans laquelle, chacun desdits au moins deux profilés (35A-35B) présente une section en sensiblement en S comportant au moins une semelle (36A et 36B), une partie transversale (38A et 38B) et une bande (37A et 37B) sensiblement normale à ladite partie transversale (38A et 38B).

8. Caisse isotherme (100) selon l'une des revendications 1 à 7, dans laquelle ladite paroi inférieure (101) comporte au moins un essieu (301), au moins un élément roulant (302) et au moins un point d'ancrage (303) destiné à être accroché derrière un dispositif de traction routier.

## Patentansprüche

1. Kühlaufbau (100), der im Wesentlichen quaderförmig ist, umfassend eine untere Wand (102), eine obere Wand (103), zwei Seitenwände (102), eine Rückwand (105) und eine Vorderwand (104), wobei die Vorderwand (104) angepasst ist, ein Kühlaggregat zu tragen, das an eine Einlassöffnung (110) von gekühlter Luft und eine Luftansaugöffnung (111) angeschlossen ist, wobei die Öffnungen (110) und (111) in der Vorderwand (104) eingerichtet sind; wobei der Kühlaufbau (100) weiter mindestens eine Kühlverteilungsvorrichtung (1) umfasst, die angepasst ist, auf der Unterseite der oberen Wand (103) fixiert zu werden, umfassend eine konvergente Düse (10), ein erstes Führungsprofil (35A) und ein zweites Führungsprofil (35B), wobei das erste Führungsprofil (35A) und das zweite Führungsprofil (35B) parallel zueinander sind und voneinander beabstandet sind, wobei das erste Führungsprofil (35A) und das zweite Führungsprofil (35B) in der Verlängerung der konvergenten Düse (10) positioniert sind, um den Strom gekühlter Luft gemäß der Längsachse des Kühlaufbaus (100) zu führen, wobei der Aufbau **gekennzeichnet ist durch** den Abstand zwischen dem ersten Führungsprofil (35A) und dem zweiten Führungsprofil (35B), welcher der kalten Luft ermöglicht, aus der Kühlverteilungsvorrichtung (1) in einen durchgehenden Bereich hervorzukommen.

2. Kühlaufbau (100) nach Anspruch 1, **dadurch gekennzeichnet, dass** die Kühlverteilungsvorrichtung (1) eine Stabilisationsrinne (30) umfasst, die zwischen dem konvergenten Teil (10) und den mindestens zwei Profilen (35A-35B) eingefügt ist, wobei die Stabilisationsrinne mindestens zwei Seitenwände (33A und 33B) und mindestens eine untere Sohle (32) umfasst, einen konstanten, im Wesentlichen rechteckigen Querschnitt aufweist und angepasst ist, damit der Strom gekühlter Luft dazu neigt, laminar zu werden.

3. Kühlaufbau (100) nach Anspruch 2, wobei die konvergente Düse (10) und die Stabilisationsrinne (30) einstückig sind.

4. Kühlaufbau (100) nach einem der Ansprüche 1 und 3, wobei sich die mindestens zwei Profile (35A-35B) über eine Länge erstrecken, die zwischen einem Drittel der Länge des Kühlaufbaus (100) und zwei Drittel der Länge des Kühlaufbaus (100) beträgt.

5. Kühlaufbau (100) nach einem der Ansprüche 1 bis 4, wobei die konvergente Düse (10) einen sich ausweitenden, im Wesentlichen rechteckigen Querschnitt aufweist.

6. Kühlaufbau (100) nach einem der Ansprüche 1 bis 5, wobei das Material, aus dem die Profile (35A-35B) bestehen, ein Polymer ist, das angepasst ist, damit die Profile (35A-35B) elastisch sind.

7. Kühlaufbau (100) nach einem der Ansprüche 1 bis 6, wobei jedes der mindestens zwei Profile (35A-35B) einen im Wesentlichen S-förmigen Querschnitt aufweist, umfassend mindestens eine Sohle (36A und 36B), einen Querteil (38A und 38B) und ein Band (37A und 37B), das im Wesentlichen normal zum Querteil (38A und 38B) verläuft.

8. Kühlaufbau (100) nach einem der Ansprüche 1 bis 7, wobei die untere Wand (101) mindestens eine Achse (301), mindestens ein Rollelement (302) und mindestens einen Verankerungspunkt (303) umfasst, der dazu bestimmt ist, hinter einer Straßenzugvorrichtung angehängt zu werden.

## Claims

1. An isothermal container (100) substantially parallelepipedic, comprising a lower wall (102), an upper wall (103), two side walls (102), a rear wall (105) and a front wall (104), said front wall (104) being adapted to support a refrigeration generator connected to a refrigerated air intake port (110) and an air suction port (111), said ports (110) and (111) being formed in said front surface (104); said isothermal container (100) further comprises at least one refrigerating diffusion device (1) adapted to be fastened on the underside of said upper wall (103) comprising a converging nozzle (10), a first guide profile (35A) and a second guide profile (35B), the first guide profile (35A) and the second guide profile (35B) being parallel to one another and disposed at a distance from each other, the first guide profile (35A) and the second guide profile (35B) being positioned in the extension of said converging nozzle (10), to guide the flow of refrigerated air along the longitudinal axis of said isothermal container (100), the container being **characterized by** the distance between the first guide profile (35A) and the second guide profile (35B) enabling cold air to emerge from the refrigerating diffusion device (1) over a continuous area.

2. The isothermal container (100) according to claim 1, **characterized in that** said refrigerating diffusion device (1) comprises a stabilization channel (30) interposed between said converging portion (10) and said at least two profiles (35A-35B), said stabilization channel comprising at least two side walls (33A and 33B) and at least one lower flange (32), having a substantially rectangular constant section, and being adapted so that the flow of refrigerated air tends to become laminar.

3. The isothermal container (100) according to claim 2, wherein said converging nozzle (10) and said stabilization channel (30) are made integral in one piece.

4. The isothermal container (100) according to any of claims 1 and 3, wherein said at least two profiles (35A-35B) extend over a length comprised between one third of the length of said isothermal container (100) and two thirds of the length of said isothermal container (100).

5. The isothermal container (100) according to any of claims 1 to 4, wherein said converging nozzle (10) has a substantially rectangular progressive section.

6. The isothermal container (100) according to any of claims 1 to 5, wherein the material composing said profiles (35A-35B) is a polymer suitable for making said profiles (35A-35B) flexible.

7. The isothermal container (100) according to any of claims 1 to 6, wherein each of said at least two profiles (35A-35B) has a substantially S-shaped section including at least one flange (36A and 36B), a transverse portion (38A and 38B) and a strip (37A and 37B) substantially normal to said transverse portion (38A and 38B).

8. The isothermal container (100) according to any of claims 1 to 7, wherein said lower wall (101) includes at least one axle (301), at least one rolling element (302) and at least one anchoring point (303) intended to be hooked behind a road traction device.
